# EUROPEAN PATENT APPLICATION

(11) **EP 4 693 538 A1**
(43) Date of publication of application: **11.02.2026**
(21) Application number: 23929509.0
(22) Date of filing: 31.03.2023
(51) Int. Cl.: H01M 10/04

(54) **SECONDARY BATTERY AND ELECTRONIC DEVICE**

(71) Applicant: Ningde Amperex Technology Limited, Ningde, Fujian 352100 (CN)
(72) Inventor: DING, Tianjie, Ningde, Fujian 352100 (CN); SONG, Huabing, Ningde, Fujian 352100 (CN)
(74) Representative: Kraus & Lederer PartGmbB
(86) International application number: PCT/CN2023/085763
(87) International publication number: WO 2024/197926

(57) **Abstract**

A secondary battery and an electronic apparatus are provided. The secondary battery includes an electrode assembly, a packaging bag, a tab, and an easy-peel adhesive tape. The packaging bag includes a main body portion configured to accommodate the electrode assembly. The main body portion includes a first surface, a second surface, a first side surface, a second side surface, and a third side surface, where the first side surface and the second side surface are oppositely disposed. The tab is electrically connected to the electrode assembly and protrudes from the first side surface. The easy-peel adhesive tape includes a first surface region, a second surface region, a first side surface region, a first lug, and a second lug. The first surface region is adhered to the first surface, the second surface region is adhered to the second surface, and the first side surface region is adhered to the third side surface. The first lug is disposed at an edge of the first side surface region and adhered to the second side surface, and the second lug is disposed at an edge of the first surface region or the second surface region and adhered to the second side surface. When observed in a second direction, the second lug and the first lug have a first overlapping portion.

## Description

### TECHNICAL FIELD

This application relates to the field of energy storage apparatuses, and in particular, to a secondary battery and an electronic apparatus including the same.

### BACKGROUND

Currently, mobile terminals on the market, such as mobile phones, tablet computers, MP3 players, MP4 players, and digital cameras, typically use built-in batteries for power supply. A built-in battery includes an electrode assembly and a packaging bag accommodating the electrode assembly, where the packaging bag is adhered and fixed to a battery compartment of a terminal device using an easy-peel adhesive tape. The material of the packaging bag is typically a plastic sealing film, such as an aluminum-plastic film. During use, the corners of the packaging bag formed by the plastic sealing film are prone to damage.

### SUMMARY

An objective of this application is to provide a secondary battery that can reduce the risk of corner damage to the packaging bag.

According to a first aspect of this application, a secondary battery is provided, including an electrode assembly, a packaging bag, a tab, and an easy-peel adhesive tape. The packaging bag includes a first packaging film and a second packaging film integrally provided. The first packaging film includes a first film region and a second film region connected to each other, and the second packaging film includes a third film region and a fourth film region connected to each other. The second film region is provided with a recess for accommodating at least a portion of the electrode assembly. The second film region and the fourth film region together form a main body portion for accommodating the electrode assembly. The first film region and the third film region are connected to form a sealing portion, and the sealing portion is hermetically connected to the main body portion. The main body portion includes a first surface and a second surface oppositely disposed in a first direction, as well as a first side surface, a second side surface, and a third side surface that connect the first surface and the second surface. The first side surface and the second side surface are oppositely disposed in a second direction, where the second direction is perpendicular to the first direction. The third side surface connects the first side surface and the second side surface. The first surface is located in the second film region, and the second surface is located in the fourth film region. The sealing portion includes a top sealing region disposed on the first side surface and a first side sealing region disposed on the third side surface. The tab is electrically connected to the electrode assembly and extends out of the packaging bag through the top sealing region. The easy-peel adhesive tape includes a substrate layer and an adhesion layer disposed on a surface of the substrate layer. The easy-peel adhesive tape includes a first surface region, a second surface region, a first side surface region, a first lug, and a second lug. The first surface region, the first side surface region, and the second surface region are sequentially connected. The first surface region is adhered to one of the first surface and the second surface, the second surface region is adhered to the other of the first surface and the second surface, and the first side surface region is adhered to the first side sealing region. The first lug is disposed at an edge of the first side surface region and adhered to the second side surface, and the second lug is disposed at an edge of the first surface region or the second surface region and adhered to the second side surface. In the second direction, the second lug and the first lug have a first overlapping portion.

In the secondary battery provided by this application, the first lug extends from an edge of the first side surface region adhered to the first side sealing region disposed on the third side surface of the main body portion of the packaging bag, and the second lug extends from an edge of the first surface region or the second surface region adhered to the first surface or the second surface of the main body portion of the packaging bag. The first lug and the second lug each extend to the second side surface of the main body portion of the packaging bag and overlap each other, effectively protecting a corner located on the first surface or the second surface close to the third side surface and the second side surface. Moreover, the force received by the easy-peel adhesive tape is entirely transmitted and evenly distributed through the easy-peel adhesive tape, reducing the risk of corner breakage.

According to some embodiments of this application, the first side sealing region includes a first portion and a second portion connected to each other. In a third direction perpendicular to the first direction and the second direction, the first portion partially overlaps with the third side surface. In the second direction, the second portion partially overlaps with the second side surface. The first overlapping portion is separated from the second portion, reducing the dimension of the secondary battery in the second direction.

According to some embodiments of this application, the secondary battery further includes an adhesion member, where the adhesion member adheres the electrode assembly to the packaging bag. In the first direction, the adhesion member is located between the electrode assembly and the first surface, reducing movement of the electrode assembly within the packaging bag.

According to some embodiments of this application, the second lug covers a junction of the first surface, the second side surface, and the third side surface, increasing the strength at the corner and further reducing the risk of corner breakage.

According to some embodiments of this application, a material of the packaging bag is an aluminum-plastic film or a steel-plastic film.

According to some embodiments of this application, in the first direction, a total thickness of the electrode assembly and the packaging bag is H1, a width of the first lug is H2, and a length of the second lug is H3, where 0.5 mm ≤ H2 ≤ H1 and 0.5 mm ≤ H3 ≤ H1.

According to some embodiments of this application, the main body portion further includes a fourth side surface disposed opposite the third side surface in a third direction, where the third direction is perpendicular to the first direction and the second direction. The sealing portion further includes a second side sealing region disposed on the fourth side surface. The easy-peel adhesive tape further includes a second side surface region, a third surface region, a third lug, and a fourth lug. The second side surface region is connected to the second surface region and adhered to the second side sealing region. The third surface region is adhered to the first surface or the second surface. The first surface region and the third surface region are located on the same side of the packaging bag. The third lug is disposed at an edge of the second side surface region and adhered to the second side surface. The fourth lug is disposed at an edge of the third surface region or the second surface region. In the second direction, the fourth lug and the third lug have a second overlapping portion. The overlapping third lug and fourth lug effectively protect a corner located on the first surface or the second surface close to the fourth side surface and the second side surface, and the force received by the easy-peel adhesive tape is entirely transmitted and evenly distributed through the easy-peel adhesive tape, reducing the risk of corner breakage.

According to some embodiments of this application, in the third direction, the first lug is separated from the third lug, reducing the dimension of the secondary battery in the second direction.

According to some embodiments of this application, in the third direction, a length of the first lug and a length of the third lug are both greater than or equal to 0.5 mm and less than or equal to 1/3 of a width of the secondary battery. This is conducive to improving adhesion stability of the first lug and the second lug to the second side surface, reducing the risk of folding of the first lug and the second lug due to excessive length that affects energy density. This is also conducive to reducing interference between devices to which the first lug and the second lug are adhered.

According to some embodiments of this application, the substrate layer includes one or more selected from the group consisting of polyethylene terephthalate, polypropylene, polyethylene, or polyimide, and the adhesion layer includes at least one of rubber, silicone, and acrylic polymer.

According to a second aspect of this application, an electronic apparatus is provided, including a battery compartment and the secondary battery according to any of the above embodiments, where a region of the easy-peel adhesive tape adhered to the second surface is adhered to the battery compartment.

### BRIEF DESCRIPTION OF THE DRAWINGS

The above and/or additional aspects and advantages of this application will become obvious and easy to understand from the description of some embodiments with reference to the following accompanying drawings.
FIG. 1 is a schematic structural diagram of a secondary battery according to an embodiment of this application;
FIG. 2 is a schematic exploded view of the secondary battery as shown in FIG. 1;
FIG. 3 is a front view of the secondary battery as shown in FIG. 1;
FIG. 4 is a cross-sectional view of the secondary battery as shown in FIG. 1 along IV-IV;
FIG. 5 is a schematic diagram of a packaging bag of the secondary battery as shown in FIG. 1 before packaging;
FIG. 6 is a schematic cross-sectional view of a packaging film of the secondary battery as shown in FIG. 1;
FIG. 7 is a rear view of the secondary battery as shown in FIG. 1;
FIG. 8 is a left view of the secondary battery as shown in FIG. 1;
FIG. 9 is a right view of the secondary battery as shown in FIG. 1;
FIG. 10 is a bottom view of the secondary battery as shown in FIG. 1;
FIG. 11 is a bottom view of a secondary battery according to another embodiment of this application;
FIG. 12 is a front view of a secondary battery according to another embodiment of this application after removing an easy-peel adhesive tape;
FIG. 13 is a bottom view of the secondary battery shown in FIG. 12 with the first side sealing region folded;
FIG. 14 is a schematic structural diagram of a secondary battery according to still another embodiment of this application;
FIG. 15 is a schematic structural diagram of a secondary battery according to still another embodiment of this application;
FIG. 16 is a schematic structural diagram of a secondary battery according to still another embodiment of this application;
FIG. 17 is a schematic structural diagram of a secondary battery according to still another embodiment of this application;
FIG. 18 is a schematic structural diagram of an electronic apparatus according to an embodiment of this application; and
FIG. 19 is a schematic structural diagram of a secondary battery provided in a comparative example of this application.

**Reference signs of main components**

| | |
|---|---|
| Secondary battery | 100 |
| Electrode assembly | 10 |
| Packaging bag | 20 |
| Tab | 30 |
| Easy-peel adhesive tape | 40 |
| Positive electrode plate | 11 |
| Negative electrode plate | 12 |
| Separator | 13 |
| Main body portion | 21 |
| Sealing portion | 22 |
| First packaging film | 20a |
| Second packaging film | 20b |
| First film region | 20a1 |
| Second film region | 20a2 |
| Third film region | 20b1 |
| Fourth film region | 20b2 |
| Recess | S1 |
| First side sealing region | 22a |
| First portion | 22a1 |
| Second portion | 22a2 |
| Second side sealing region | 22c |
| Third portion | 22c1 |
| Fourth portion | 22c2 |
| Top sealing region | 22b |
| Adhesive layer | 50 |
| First folded edge portion | 221 |
| Second folded edge portion | 222 |
| Protective layer | 23 |
| Metal layer | 24 |
| Polymer layer | 25 |
| First surface | 201 |
| Second surface | 202 |
| First side surface | 203 |
| Second side surface | 204 |
| Third side surface | 205 |
| Fourth side surface | 206 |
| Corner | R |
| First surface region | 41 |
| Second surface region | 42 |
| First side surface region | 43 |
| Second side surface region | 44 |
| Third surface region | 45 |
| First lug | 46 |
| Second lug | 47 |
| Third lug | 48 |
| Fourth lug | 49 |
| First end | 201a |
| Second end | 201b |
| Third end | 201c |
| Fourth end | 201d |
| Fifth end | 202a |
| Sixth end | 202b |
| Seventh end | 202c |
| Eighth end | 202d |
| Ninth end | 205a |
| Tenth end | 205b |
| Eleventh end | 206a |
| Twelfth end | 206b |
| First overlapping portion | 40a |
| Second overlapping portion | 40b |
| Substrate layer | 401 |
| Adhesion layer | 402 |
| Adhesion member | 60 |
| Handle | 406 |
| Electronic apparatus | 200 |
| Main body | 210 |
| Cover | 220 |
| Battery compartment | 211 |
| First direction | Z |
| Second direction | X |
| Third direction | Y |

### DETAILED DESCRIPTION

The following describes in detail embodiments of technical solutions of this application with reference to the accompanying drawings. Apparently, the described embodiments are only some but not all of these embodiments of this application. The following embodiments can be used as examples to clearly describe the technical solutions of this application and should not constitute any limitations on the protection scope of this application. It can be understood by those skilled in the art that, in the absence of conflict, the following embodiments and features in some embodiments may be combined.

In the description of some embodiments of this application, unless otherwise specified and defined explicitly, the terms "mounting" and "connection" should be understood in their general senses. For example, they may refer to a fixed connection, a detachable connection, or an integral connection, and may refer to a direct connection or an indirect connection. Persons of ordinary skill in the art can understand specific meanings of the term in this application based on specific situations.

The term "and/or" in this application is only an associative relationship for describing associated objects, indicating that three relationships may be present. For example, A and/or B may indicate the following three cases: presence of only A; presence of both A and B; and presence of only B.

In the prior art, the packaging bag is formed by packaging a packaging film after punching. The applicant has found that after punching the packaging film, the corners of the deep pit surface undergo significant deformation due to intense stretching, resulting in a thinner thickness and the lowest strength at the corners after punching, making them the weakest points of the packaging bag. During drop tests and other processes, stress is transmitted through an easy-peel adhesive tape to the deep pit surface of the packaging bag, causing the corners of the deep pit surface to be prone to damage.

Based on the above issues identified by the applicant, the applicant has improved the structure of the easy-peel adhesive tape by partially overlapping the first lug and the second lug and adhering them to the packaging bag to address the above issues. The following further describes some embodiments of this application.

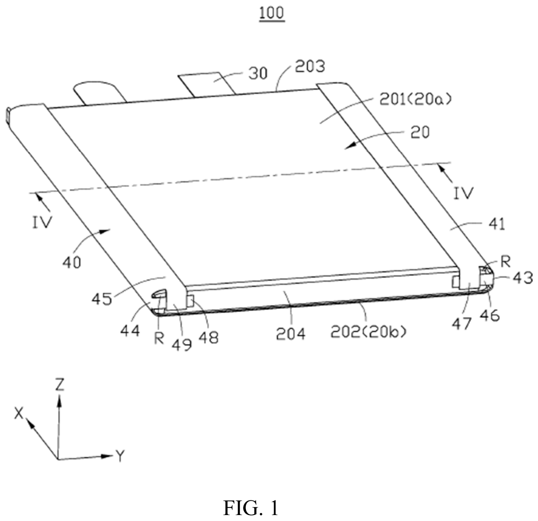

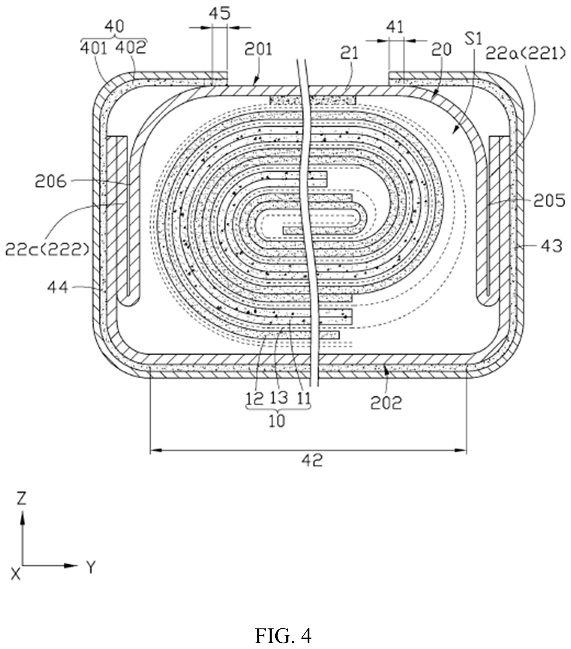

Referring to FIG. 1 and FIG. 4, an embodiment of this application provides a secondary battery 100, including an electrode assembly 10, a packaging bag 20, a tab 30, and an easy-peel adhesive tape 40. The electrode assembly 10 is located within the packaging bag 20. The tab 30 is electrically connected to the electrode assembly 10 and extends out of the packaging bag 20. Two tabs 30 are provided, one being a positive tab and the other a negative tab. The easy-peel adhesive tape 40 includes a substrate layer 401 and an adhesion layer 402 disposed on a surface of the substrate layer 401, where the adhesion layer 402 is adhered to the packaging bag 20. The substrate layer 401 includes one or more selected from the group consisting of polyethylene terephthalate (PET), polypropylene (PP), polyethylene (PE), and polyimide (PI). The adhesion layer 402 includes at least one of rubber, silicone, or acrylic polymer. The surface of the substrate layer 401 facing away from the adhesion layer 402 is used for adhering to other external components, such as a battery compartment. In some embodiments, the adhesion layer 402 may be disposed on two opposite surfaces of the substrate layer 401, allowing the easy-peel adhesive tape 40 to adhere to the battery compartment through the adhesion layer 402. Alternatively, the surface of the substrate layer 401 facing away from the adhesion layer 402 may be adhered to the battery compartment using another adhesion member (for example, double-sided tape or glue).

In some embodiments, the electrode assembly 10 may be a wound structure. Specifically, as shown in FIG. 4, the electrode assembly 10 includes a positive electrode plate 11, a negative electrode plate 12, and a separator 13. The positive electrode plate 11, the separator 13, and the negative electrode plate 12 are sequentially stacked and wound. In other embodiments, the electrode assembly 10 may also be a laminated structure, that is, multiple positive electrode plates 11, multiple separators 13, and multiple negative electrode plates 12 are alternately stacked.

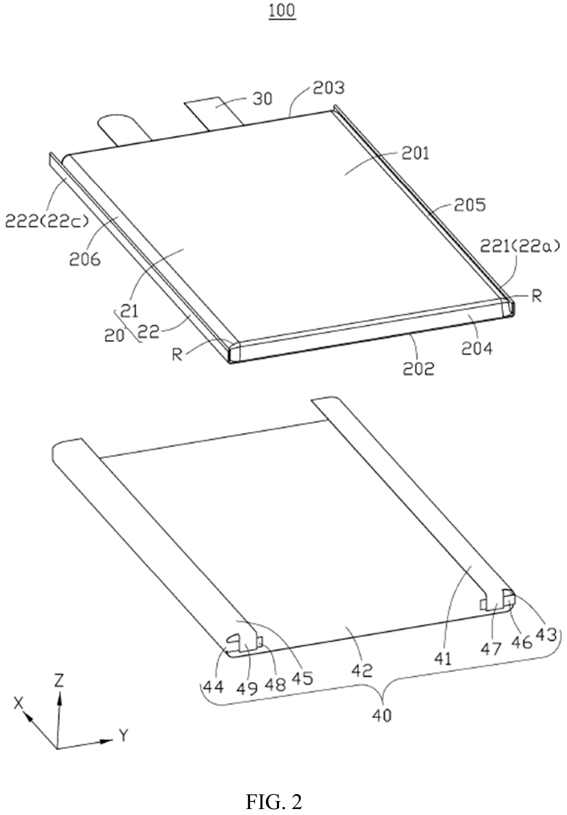

As shown in FIG. 2, FIG. 3, and FIG. 5, the packaging bag 20 includes a main body portion 21 and a sealing portion 22. The electrode assembly 10 is disposed in the main body portion 21. A thickness direction of the electrode assembly 10 is defined as a first direction Z, the direction in which the tab 30 protrudes from the electrode assembly 10 (that is, the direction from the electrode assembly 10 to the tab 30) is defined as a second direction X, and the direction perpendicular to the first direction Z and the second direction X is defined as a third direction Y. The second direction X is also perpendicular to the first direction Z.

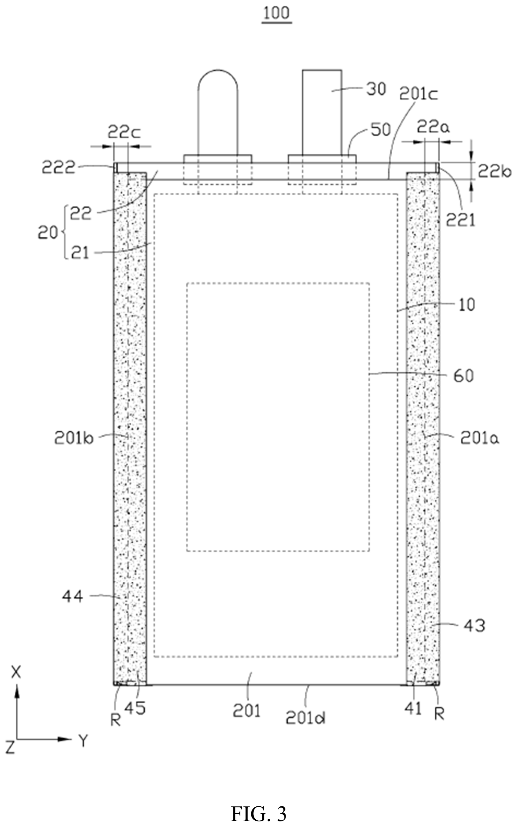

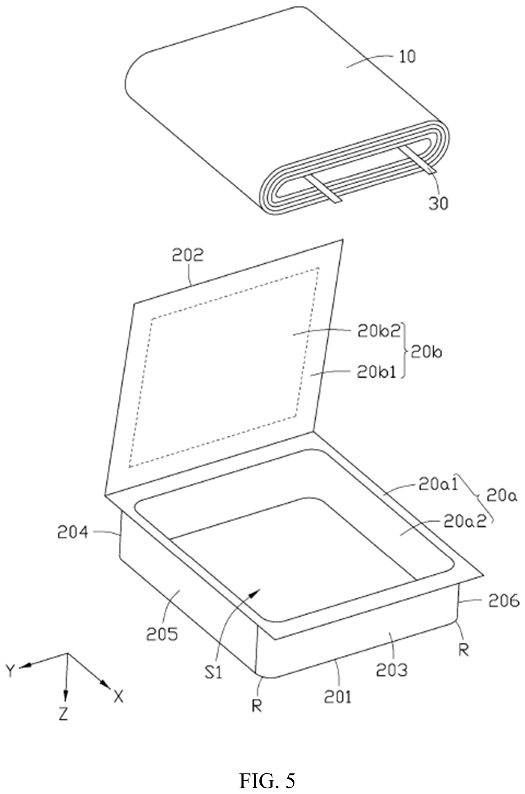

Referring to FIG. 4 and FIG. 5, the packaging bag 20 includes a first packaging film 20a and a second packaging film 20b oppositely disposed in the first direction Z, where the first packaging film 20a and the second packaging film 20b are integrally provided and packaged to form the packaging bag 20. The first packaging film 20a includes a first film region 20a1 and a second film region 20a2 connected to each other. Three side edges of the second film region 20a2 are surrounded by the first film region 20a1. The second packaging film 20b includes a third film region 20b1 and a fourth film region 20b2 connected to each other. Three side edges of the fourth film region 20b2 are surrounded by the third film region 20b1. The fourth film region 20b2 of the second packaging film 20b is substantially flat, and the second film region 20a2 of the first packaging film 20a is provided with a recess S1 for accommodating at least a portion of the electrode assembly 10. The second film region 20a2 and the fourth film region 20b2 together form the main body portion 21 for accommodating the electrode assembly 10. The first film region 20a1 and the third film region 20b1 are connected to form the sealing portion 22 for sealing the main body portion 21. Referring to FIG. 3 and FIG. 5 together, when preparing the packaging bag 20, a sealing head of a packaging device may be used to simultaneously apply a certain temperature and pressure to the first film region 20a1 and the third film region 20b1, the first film region 20a1 and the third film region 20b1 are connected to form the sealing portion 22, thereby packaging the main body portion 21 for accommodating the electrode assembly 10 and reducing the risk of electrolyte leakage.

Referring to FIG. 2, FIG. 3, and FIG. 4, the sealing portion 22 includes a first side sealing region 22a, a second side sealing region 22c, and a top sealing region 22b. The tab 30 is connected to the electrode assembly 10 and extends out of the packaging bag 20 through the top sealing region 22b. The first side sealing region 22a and the second side sealing region 22c are oppositely disposed in the third direction Y. Specifically, the first film region 20a1 and the third film region 20b1 located on a first side in the third direction Y are connected to form the first side sealing region 22a, and the first film region 20a1 and the third film region 20b1 located on the opposite side of the first side in the third direction Y are connected to form the second side sealing region 22c. The first film region 20a1 and the third film region 20b1 located on a first side in the second direction X are connected to form the top sealing region 22b, and the first film region 20a1 and the third film region 20b1 located on the opposite side of the first side in the second direction X are directly connected without heat sealing.

Referring to FIG. 1, FIG. 2, and FIG. 4, an outer surface of the main body portion 21 facing away from the electrode assembly 10 includes a first surface 201 and a second surface 202 oppositely disposed in the first direction Z, a first side surface 203, a second side surface 204, a third side surface 205, and a fourth side surface 206 connecting the first surface 201 and the second surface 202. The first surface 201 and the second surface 202 are planar and substantially parallel. The first surface 201 is an outer surface of the second film region 20a2 of the first packaging film 20a facing away from the electrode assembly 10. The second surface 202 is an outer surface of the fourth film region 20b2 of the second packaging film 20b facing away from the electrode assembly 10. The first side surface 203, the second side surface 204, the third side surface 205, and the fourth side surface 206 may be planar or curved and are sequentially connected, surrounding a periphery of the first surface 201. The first side surface 203 and the second side surface 204 are oppositely disposed in the second direction X and may extend along the third direction Y. The top sealing region 22b protrudes outward from the first side surface 203. The tab 30 protrudes from the first side surface 203. The third side surface 205 and the fourth side surface 206 are oppositely disposed in the third direction Y and may extend along the second direction X. The first side sealing region 22a protrudes outward from the third side surface 205. The second side sealing region 22c protrudes outward from the fourth side surface 206. A junction of the first surface 201 with the adjacent first side surface 203 (or the second side surface 204) and the third side surface 205 (or the fourth side surface 206) forms a corner R of the first packaging film 20a.

Referring to FIG. 3, in some embodiments, the secondary battery 100 further includes an adhesive layer 50. The adhesive layer 50 is used to adhere the top sealing region 22b of the sealing portion 22 to the tab 30, and a portion of the adhesive layer 50 is disposed outside the sealing portion 22. The adhesive layer 50 includes an insulating material, and the insulating material may be selected from at least one of polyethylene, polypropylene, phenolic resin, melamine resin, unsaturated polyester resin, epoxy resin, silicone resin, or polyurethane.

Referring to FIG. 2 and FIG. 4, the first side sealing region 22a of the sealing portion 22 is folded to form a first folded edge portion 221, and the first folded edge portion 221 and the third side surface 205 of the main body portion 21 are oppositely disposed in the third direction Y, thereby reducing the dimension of the secondary battery 100 in the third direction Y and improving space utilization and energy density. The second side sealing region 22c of the sealing portion 22 is folded to form a second folded edge portion 222, and the second folded edge portion 222 and the fourth side surface 206 of the main body portion 21 are oppositely disposed in the third direction Y, thereby reducing the dimension of the secondary battery 100 in the third direction Y and further improving space utilization and energy density. The first folded edge portion 221 and the second folded edge portion 222 may be single-folded, double-folded, or multi-folded structures formed by one, two, or multiple folds, which is not limited in this application.

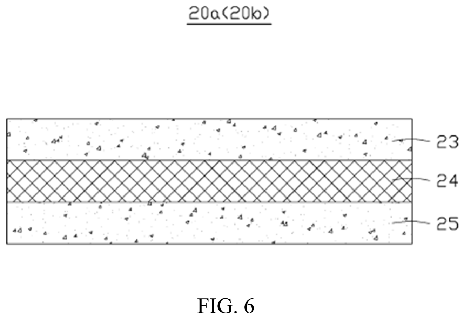

The materials of the first packaging film 20a and the second packaging film 20b are both multilayer sheets. As shown in FIG. 6, both the first packaging film 20a and the second packaging film 20b may include a protective layer 23, a metal layer 24, and a polymer layer 25 sequentially stacked. The polymer layer 25 is positioned closer to the electrode assembly 10 compared to the protective layer 23. The material of the protective layer 23 may be a polymer resin, which can protect the metal layer 24, reduce the risk of damage to the metal layer 24 due to external forces, and delay air infiltration from an external environment, maintaining a normal operating environment inside the secondary battery 100. In some embodiments, the material of the protective layer 23 may be selected from at least one of ethylene terephthalate, polybutylene terephthalate, polyvinylidene fluoride, polytetrafluoroethylene, polypropylene, polyamide, or polyimide. The metal layer 24 can delay water infiltration from the external environment and reduce damage to the electrode assembly 10 caused by external forces. In some embodiments, the metal layer 24 may be an aluminum foil layer or a steel foil layer. The polymer layer 25, with the property of being melted by heating, can be used for packaging, and can reduce the risk of the multilayer sheet being dissolved or swelled by organic solvents in the electrolyte. The polymer layer 25 can also reduce the risk of corrosion of the metal layer due to contact between the electrolytic salts in the electrolyte and the metal layer 24. In some embodiments, the polymer layer 25 includes a polymer material, which may be selected from at least one of polypropylene, propylene copolymer, polyethylene, or polymethyl methacrylate. An adhesion layer may also be provided between the protective layer 23 and the metal layer 24 to adhere the protective layer 23 and the metal layer 24 together. It can be understood that when the first packaging film 20a and the second packaging film 20b are obtained by folding a single packaging film, the materials of the protective layer 23, the metal layer 24, and the polymer layer 25 of the first packaging film 20a are the same as those of the protective layer 23, the metal layer 24, and the polymer layer 25 of the second packaging film 20b, respectively. During packaging, the polymer layer 25 of the first packaging film 20a and the polymer layer 25 of the first packaging film 20a are melted and adhered together. In some embodiments, the material of the packaging bag 20 is an aluminum-plastic film or a steel-plastic film.

Referring to FIG. 1, FIG. 2, and FIG. 4, the easy-peel adhesive tape 40 includes a first surface region 41, a second surface region 42, a first side surface region 43, a second side surface region 44, a third surface region 45, a first lug 46, a second lug 47, a third lug 48, and a fourth lug 49. The first surface region 41, the first side surface region 43, the second surface region 42, the second side surface region 44, and the third surface region 45 are sequentially connected. The first surface region 41 and the second surface region 42 are oppositely disposed in the first direction Z, and the third surface region 45 and the second surface region 42 are also oppositely disposed in the first direction Z, with the first surface region 41 and the third surface region 45 located on the same side of the packaging bag 20 in the first direction Z. The first side surface region 43 and the second side surface region 44 are oppositely disposed in the third direction Y.

The first surface region 41 and the third surface region 45 are located on a side of the first packaging film 20a facing away from the second packaging film 20b and are adhered to the first surface 201, covering at least a portion of the first surface 201 in the second direction X and the third direction Y. Referring to FIG. 3, in the first direction Z, the first surface 201 has a first end 201a and a second end 201b oppositely disposed in the third direction Y, and a third end 201c close to the tab 30 and a fourth end 201d away from the tab 30 in the second direction X. In the first direction Z, the first surface region 41 is configured from the first end 201a in the third direction Y and is disposed away from the second end 201b, and the first surface region 41 is also configured from the third end 201c to the fourth end 201d in the second direction X. In the first direction Z, the third surface region 45 is configured from the second end 201b in the third direction Y and is disposed away from an end of the first surface region 41 away from the first end 201a, and the third surface region 45 is also configured from the third end 201c to the fourth end 201d in the second direction X.

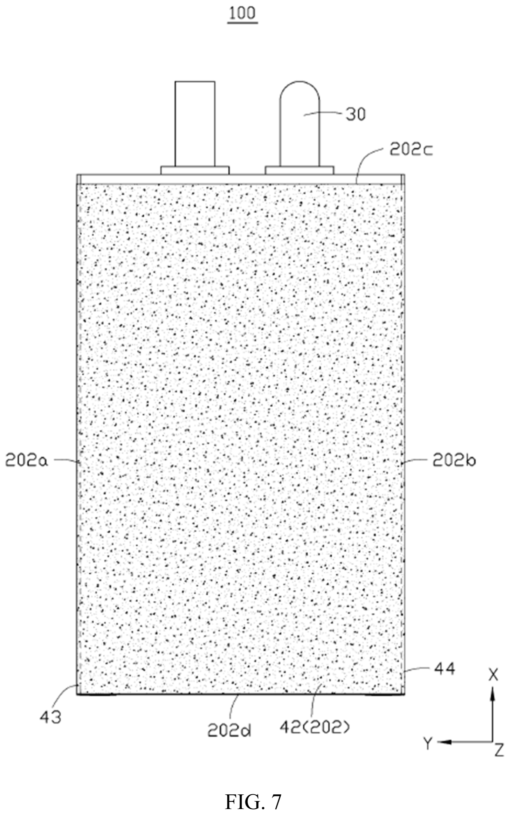

Referring to FIG. 1, FIG. 2, and FIG. 4, the second surface region 42 is located on a side of the second packaging film 20b facing away from the first packaging film 20a and is adhered to the second surface 202, covering the second surface 202 in the second direction X and the third direction Y. Referring to FIG. 7, in the first direction Z, the second surface 202 has a fifth end 202a on a side of the first end 201a and a sixth end 202b on a side of the second end 201b in the third direction Y, and a seventh end 202c on a side of the third end 201c and an eighth end 202d on a side of the fourth end 201d in the second direction X. In the first direction Z, the second surface region 42 is configured from the fifth end 202a to the sixth end 202b in the third direction Y, and the second surface region 42 is configured from the seventh end 202c to the eighth end 202d in the second direction X.

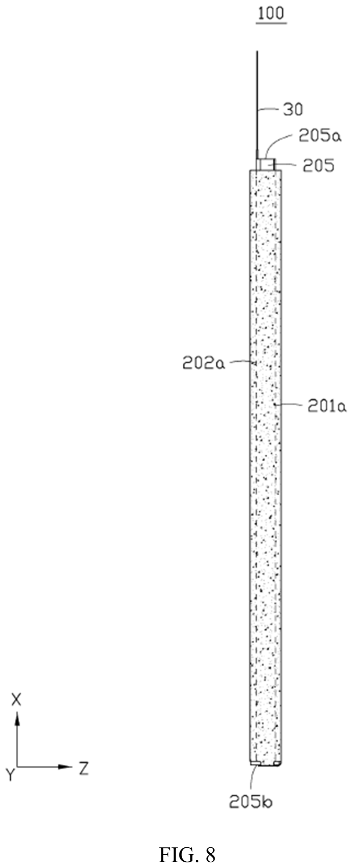

Referring to FIG. 1, FIG. 2, and FIG. 4, the first side surface region 43 is adhered to the first side sealing region 22a disposed on the third side surface 205 and covers the third side surface 205 in the first direction Z and the second direction X. Referring to FIG. 8, in the third direction Y, the third side surface 205 has a ninth end 205a close to the tab 30 and a tenth end 205b away from the tab 30 in the first direction X. In the third direction Y, the first side surface region 43 is configured from the tenth end 205b in the second direction X and is disposed away from the ninth end 205a, and the first side surface region 43 is configured from the first end 201a to the fifth end 202a in the first direction Z.

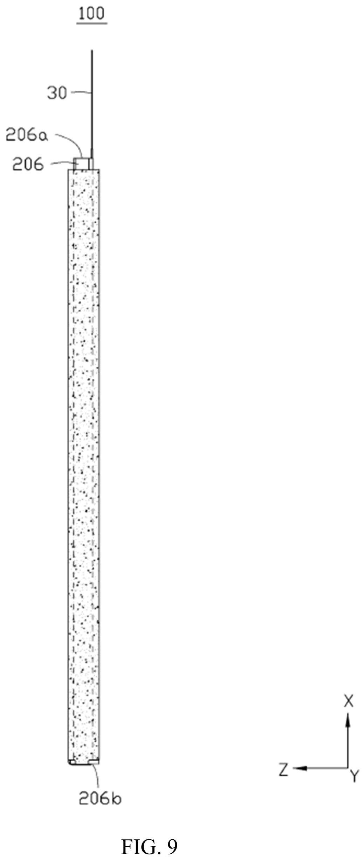

Referring to FIG. 1, FIG. 2, and FIG. 4, the second side surface region 44 is adhered to the second side sealing region 22c disposed on the fourth side surface 206 and covers the fourth side surface 206 in the first direction Z and the second direction X. Referring to FIG. 9, in the third direction Y, the fourth side surface 206 has an eleventh end 206a close to the tab 30 and a twelfth end 206b away from the tab 30 in the second direction X. In the third direction Y, the second side surface region 44 is configured from the twelfth end 206b in the second direction X and is disposed away from the eleventh end 206a, and the second side surface region 44 is also configured from the second end 201b to the sixth end 202b in the first direction Z.

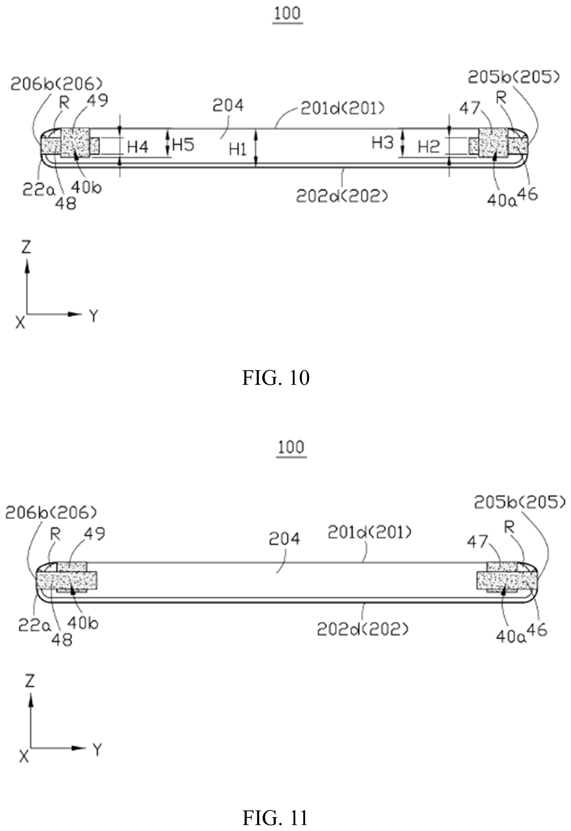

Referring to FIG. 1 and FIG. 10 together, the first lug 46 is disposed at an edge of the first side surface region 43 on the side of the tenth end 205b in the second direction X and is adhered to the second side surface 204. In the second direction X, the first lug 46 is configured from the tenth end 205b in the third direction Y and is disposed away from the twelfth end 206b. The second lug 47 is disposed at an edge of the first surface region 41 on the side of the fourth end 201d in the second direction X and is adhered to the second side surface 204. In the second direction X, the second lug 47 is configured from the fourth end 201d in the first direction Z and extends toward the eighth end 202d. In the second direction X, the second lug 47 covers at least a portion of a corner R located at the junction of the first surface 201, the second side surface 204, and the third side surface 205. The third lug 48 is disposed at an edge of the second side surface region 44 on the side of the twelfth end 206b in the second direction X and is adhered to the second side surface 204. In the second direction X, the third lug 48 is configured from the twelfth end 206b in the third direction Y and is disposed away from the tenth end 205b. The fourth lug 49 is disposed at an edge of the third surface region 45 on the side of the tenth end 205b in the second direction X and is adhered to the second side surface 204. In the second direction X, the fourth lug 49 is configured from the fourth end 201d in the first direction Z and extends toward the eighth end 202d. In the second direction X, the fourth lug 49 covers at least a portion of a corner R located at the junction of the first surface 201, the second side surface 204, and the fourth side surface 206. In the second direction X, the first lug 46 and the second lug 47 have a first overlapping portion 40a, and the third lug 48 and the fourth lug 49 have a second overlapping portion 40b.

The first lug 46, disposed at the edge of the first side surface region 43 adhered to the first side sealing region 22a disposed on the third side surface 205 of the packaging bag 20, and the second lug 47, disposed at the edge of the first surface region 41 adhered to the first surface 201 of the packaging bag 20, each extend to the second side surface 204 of the packaging bag 20 and overlap each other, effectively protecting the corner R located at the junction of the first surface 201, the second side surface 204, and the third side surface 205. The force received by the first surface region 41 of the easy-peel adhesive tape 40 is entirely transmitted and evenly distributed through the easy-peel adhesive tape 40, reducing the risk of corner breakage. The third lug 48, disposed at the edge of the second side surface region 44 adhered to the second side sealing region 22c disposed on the fourth side surface 206 of the packaging bag 20, and the fourth lug 49, disposed at the edge of the third surface region 45 adhered to the first surface 201 of the packaging bag 20, each extend to the second side surface 204 of the packaging bag 20 and overlap each other, effectively protecting the corner R located at the junction of the first surface 201, the second surface 204, and the fourth side surface 206. The force received by the third surface region 45 of the easy-peel adhesive tape 40 is entirely transmitted and evenly distributed through the easy-peel adhesive tape 40, reducing the risk of corner breakage.

In the second direction X, the second lug 47 is positioned over the first lug 46, and the fourth lug 49 is positioned over the third lug 48. That is, in the second direction X, the first lug 46 is positioned closer to the second side surface 204 of the packaging bag 20 compared to the second lug 47, and the third lug 48 is positioned closer to the second side surface 204 of the packaging bag 20 compared to the fourth lug 49. Referring to FIG. 11, in some embodiments, in the second direction X, the second lug 47 is located below the first lug 46, and the fourth lug 49 is located below the third lug 48, allowing the second lug 47 and the fourth lug 49 to directly contact the corner R, which is more conducive to reducing corner damage. Due to the thickness of the secondary battery 100 in the first direction Z, the lengths of the second lug 47 and the fourth lug 49 in the first direction Z are relatively short, and the lengths of the first lug 46 and the third lug 48 in the third direction Y can be relatively long. The second lug 47 and the fourth lug 49 are respectively positioned on the sides of the first lug 46 and the third lug 48 close to the packaging bag 20, making the first lug 46 and the third lug 49 less prone to detachment.

In some embodiments, in the third direction Y, the lengths of the first lug 46 and the third lug 48 are both greater than or equal to 0.5 mm and less than or equal to 1/3 of the width of the secondary battery 100. This is conducive to improving adhesion stability of the first lug 46 and the second lug 48 to the second side surface 204, reducing the risk of folding of the first lug 46 and the second lug 48 due to excessive length that affects energy density. This also is conducive to reducing interference between a device adhering the first lug 46 and the second lug 48. In the third direction Y, the length of the first lug 46 and the length of the third lug 48 may be the same or different. In the third direction Y, the first lug 46 and the third lug 48 are spaced apart.

Referring to FIG. 10, in some embodiments, along the first direction Z, a total thickness of the electrode assembly 10 and the packaging bag 20 is H1, a width of the first lug 46 is H2, and a width of the third lug 48 is H4, where H2 ≤ H1 and H4 ≤ H1, so that the first lug 46 and the third lug 48 do not exceed the fourth end 201d or the eighth end 202d of the packaging bag 20 in the first direction Z. The width H2 of the first lug 46 and the width H4 of the third lug 48 may be equal or unequal. In some embodiments, H2 ≥ 0.5 mm and H4 ≥ 0.5 mm, allowing the first lug 46 and the third lug 48 to extend a certain distance in the first direction Z to overlap with the corresponding second lug 47 or fourth lug 49.

In some embodiments, along the first direction Z, a length of the second lug 47 is H3, and a length of the fourth lug 49 is H5, where H3 ≤ H1 and H5 ≤ H1, so that the second lug 47 and the fourth lug 49 do not exceed the fourth end 201d or the eighth end 202d of the packaging bag 20 in the first direction Z. The width H3 of the second lug 47 and the width H5 of the fourth lug 49 may be equal or unequal. In some embodiments, H3 ≥ 0.5 mm and H5 ≥ 0.5 mm, allowing the second lug 47 and the fourth lug 49 to extend a certain distance in the first direction Z to overlap with the corresponding first lug 46 or third lug 48.

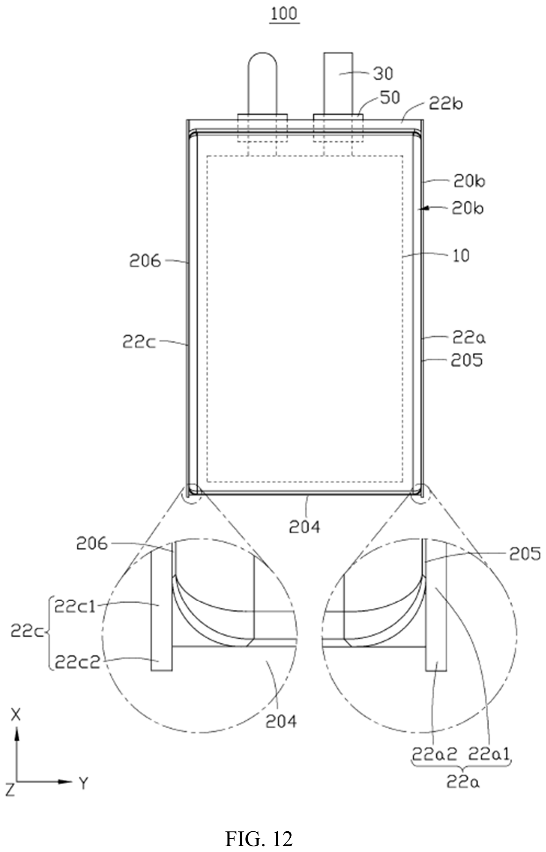

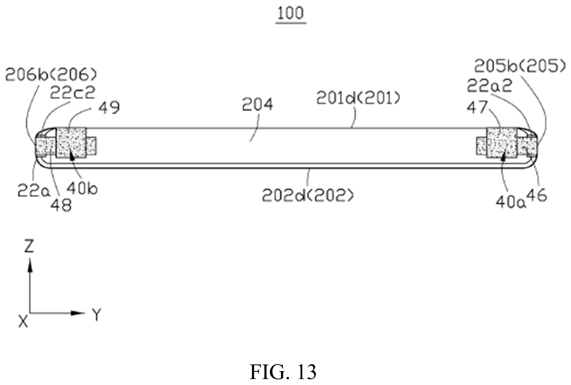

Since the first packaging film 20a and the second packaging film 20b are obtained by folding a same single packaging film, when packaging the first packaging film 20a and the second packaging film 20b, the side where the folded edge of the packaging film is located does not require packaging. After packaging, the junction of the first side sealing region 22a and the second side sealing region 22c with the side where the folded edge of the packaging film is located may produce protruding corners. Referring to FIG. 12 and FIG. 13, in some embodiments, the first side sealing region 22a includes a first portion 22a1 and a second portion 22a2 connected to each other, and the second side sealing region 22c includes a third portion 22c1 and a fourth portion 22c2 connected to each other. In the third direction Y, the first portion 22a1 overlaps with the third side surface 205, and the second portion 22a2 protrudes outward from the third side surface 205; the third portion 22c1 overlaps with the fourth side surface 206, and the fourth portion 22c2 protrudes outward from the fourth side surface 206. The second portion 22a2 and the fourth portion 22c2 are each bent toward the second side surface 204, so that in the second direction X, both the second portion 22a2 and the fourth portion 22c2 partially overlap with the second side surface 204, which is conducive to reducing the dimension of the secondary battery 100 in the second direction X. In the second direction X, the first overlapping portion 40a of the first lug 46 and the second lug 47 is separated from the second portion 22a2 of the first side sealing region 22a, and the second overlapping portion 40b of the third 48 and the fourth lug 49 is separated from the fourth portion 22c2 of the second side sealing region 22c, which is more conducive to reducing the dimension of the secondary battery 100 in the second direction X and improving space utilization and energy density.

Referring to FIG. 4 and FIG. 4, the secondary battery 100 further includes an adhesion member 60, and the adhesion member 60 adheres the electrode assembly 10 to the packaging bag 20. In the first direction Z, the adhesion member 60 is located between the electrode assembly 10 and the first surface 201 to reduce movement of the electrode assembly 10 within the packaging bag 20, thereby mitigating corner collisions due to movement of the electrode assembly 10 and reducing corner damage. However, when the electrode assembly 10 is adhered to the packaging bag 20 through the adhesion member 60, during a drop test of the secondary battery 100, the adhesion member 60 and the first surface region 41 and the third surface region 45 of the easy-peel adhesive tape 40 may exert a pulling force on the corner R of the packaging bag 20, making the corner R more prone to damage. By providing the first lug 46, the second lug 47, the third lug 48, and the fourth lug 49, effective protection is provided to the corner R, reducing corner damage due to pulling force of the adhesion member 60 and the easy-peel adhesive tape 40. In the first direction X, the adhesion member 60 is located at a central portion of the electrode assembly 10. When the adhesion member 60 is located at the central portion of the electrode assembly 10, during a drop, the adhesion member 60 easily transfers the impact force of the electrode assembly 10 to two corners R located on opposite sides in the third direction Y. At this time, the overlapping first lug 46 and second lug 47 as well as the overlapping third lug 48 and fourth lug 49 disposed adjacent to these two corners R can conduct the impact force to non-corner positions of the packaging bag 20, reducing the risk of breakage at these two corners R. The adhesion member 60 may be, but is not limited to, a double-sided tape or an adhesive.

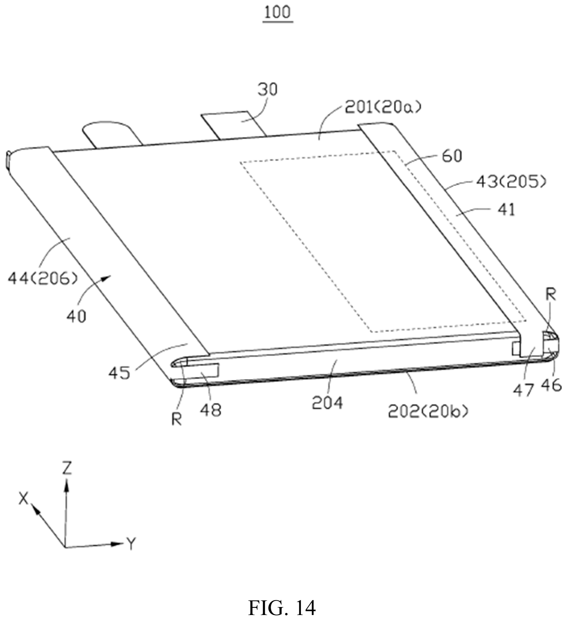

In some embodiments, overlapping tabs may be provided only on one side of the first packaging film 20a in the third direction Y to protect the corners R of the first packaging film 20a that are more prone to damage. Specifically, referring to FIG. 14, the adhesion member 60 is positioned closer to the third side surface 205 than to the fourth side surface 206, and the easy-peel adhesive tape 40 may not include the fourth lug, only providing the overlapping first lug 46 and second lug 47 close to the third side surface 205 of the packaging bag 20. When the adhesion member 60 is deviated from the center of the electrode assembly 10 and positioned close to the third side surface 205, the corner R on the side of the third side surface 205 of the packaging bag 20 is more likely to break during a drop. Providing overlapping tabs on this side can effectively reduce the risk of corner breakage of the packaging bag 20.

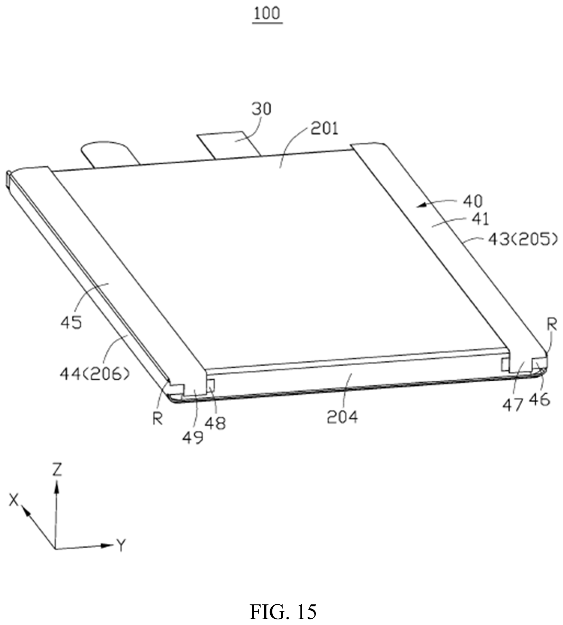

Referring to FIG. 15, in some embodiments, the second lug 47 may further cover the entire corner R located at the junction of the first surface 201, the second side surface 204, and the third side surface 205, and the fourth lug 49 may further cover the entire corner R located at the junction of the first surface 201, the second side surface 204, and the fourth side surface 206, increasing the strength at the corners R and further reducing the risk of corner breakage.

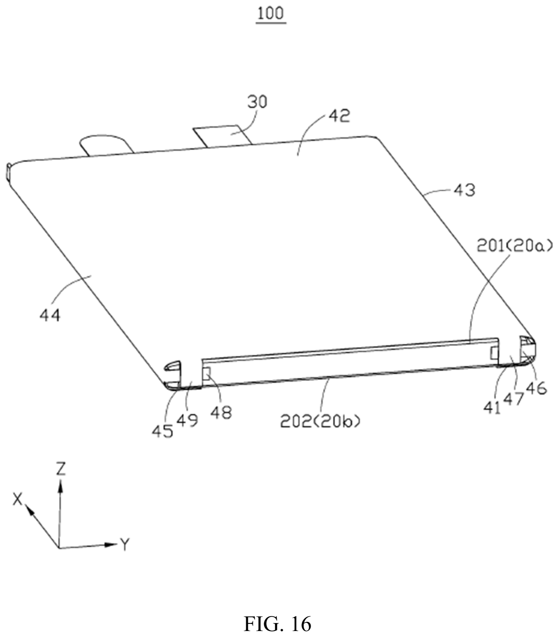

Referring to FIG. 16, in some embodiments, the second surface region 42 may be located on a side of the first packaging film 20a facing away from the second packaging film 20b and adhered to the first surface 201. In the first direction Z, the second surface region 42 covers the entire first surface 201 in the third direction Y. The first surface region 41 and the third surface region 45 may be located on a side of the second packaging film 20b facing away from the first packaging film 20a and adhered to the second surface 202. The second lug 47 and the fourth lug 49 are disposed at edges of the second surface region 42 and are oppositely disposed in the third direction Y. This configuration allows a portion of the second packaging film 20b to be exposed outside the battery compartment after the secondary battery 100 is assembled in the battery compartment.

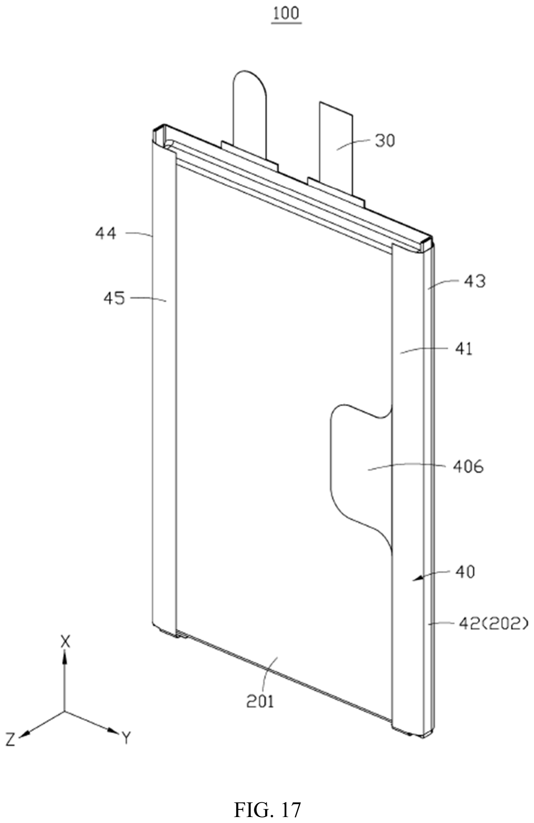

Referring to FIG. 17, in some embodiments, the easy-peel adhesive tape 40 further includes a handle 406. The handle 406 is disposed on the first surface region 41 for a user to grip to pull the entire easy-peel adhesive tape 40. Specifically, the handle 406 is formed by extending from an edge of the first surface region 41. In other embodiments, the handle 406 may also be disposed on the third surface region 45.

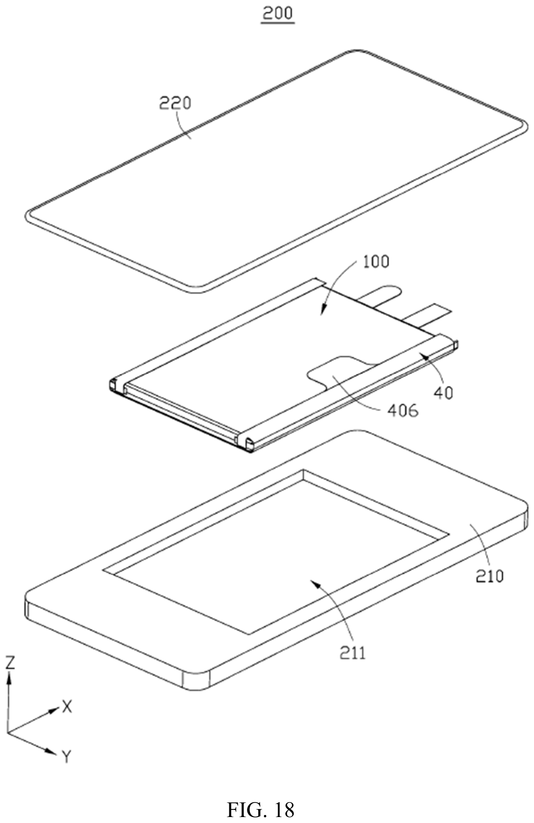

Referring to FIG. 17 and FIG. 18, an embodiment of this application further provides an electronic apparatus 200, where the electronic apparatus 200 includes a main body 210 and a cover 220. The main body 210 is provided with a battery compartment 211, and the cover 220 is disposed on the main body 210 and covers the battery compartment 211. The secondary battery 100 is disposed in the battery compartment 211 and is adhered to the battery compartment 211 through the second surface region 42 of the easy-peel adhesive tape 40 adhered to the second surface 102, with the handle 406 exposed outside the battery compartment 211.

Specific examples and comparative examples below are used to describe the performance of the battery provided in this application.

### Example 1

The electrode assembly was placed in the packaging bag, and after electrolyte injection, packaging, and formation, a finished battery was obtained. Then, the finished battery was wrapped with the easy-peel adhesive tape, and a pressure of 5.0 ± 1 kgf/cm² was applied to a surface of the easy-peel adhesive tape to adhere the easy-peel adhesive tape to the packaging bag, and the secondary battery as shown in FIG. 1 was obtained.

### Comparative Example 1

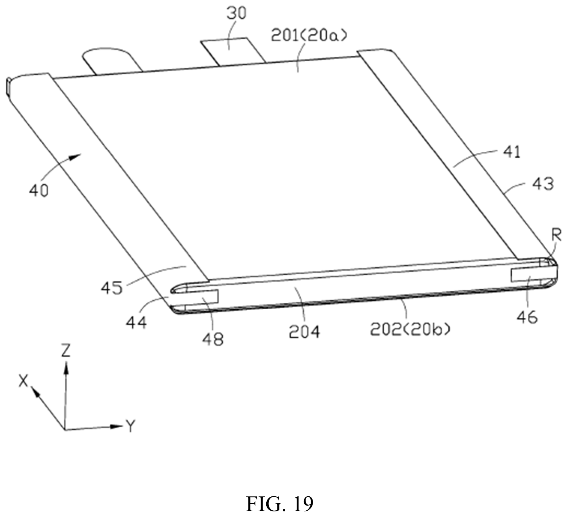

The electrode assembly was placed in the packaging bag, and after electrolyte injection, packaging, and formation, a finished battery was obtained. Then, the finished battery was wrapped with the easy-peel adhesive tape, and a pressure of 5.0 ± 1 kgf/cm² was applied to the surface of the easy-peel adhesive tape to adhere the easy-peel adhesive tape to the packaging bag, and the secondary battery as shown in FIG. 19 was obtained. The difference between the secondary battery shown in FIG. 19 and the secondary battery shown in FIG. 1 was that the easy-peel adhesive tape 40 of the secondary battery shown in FIG. 19 did not include the second lug and the fourth lug.

Eight samples of the secondary batteries from the example and the comparative example were taken for drop testing. Test results are shown in Table 1.

### Drop test:

The secondary battery was fixed in a test fixture, and the initial voltage of the secondary battery was tested. Then, six rounds of drop tests were conducted at a height of 1.8 m, with each round including six drops in six directions: upper, down, upper-right, lower-right, upper-left, and lower-left. The final voltage of the secondary battery was then tested.

The voltages before and after the test were compared to confirm whether there was a significant voltage drop. The packaging bag was observed for electrolyte leakage or damage.

**Table 1**

| | Voltage drop | Electrolyte leakage | Damage |
|---|---|---|---|
| Example 1 | 0/8 | 0/8 | 0/8 |
| Comparative Example 1 | 8/8 | 8/8 | 8/8 |

| | | | |
|---|---|---|---|
| Note: X/8 indicates that X out of 8 tested samples exhibit voltage drop, electrolyte leakage, or damage. | | | |

From the test results in Table 1, it can be seen that providing a second lug overlapping with the first lug and a fourth lug overlapping with the third lug on the easy-peel adhesive tape can reduce the issues of electrolyte leakage and damage of the packaging bag during drops.

The descriptions disclosed above are merely preferred embodiments of this application, and certainly cannot constitute any limitation on this application. Accordingly, equivalent changes made in accordance with this application still fall within the scope of this application.

## Claims

1. A secondary battery, comprising:
an electrode assembly;
a packaging bag, comprising a first packaging film and a second packaging film integrally provided, the first packaging film comprising a first film region and a second film region connected to each other, and the second packaging film comprising a third film region and a fourth film region connected to each other;
wherein the second film region is provided with a recess configured to accommodate at least a portion of the electrode assembly, the second film region and the fourth film region together form a main body portion, the first film region and the third film region are connected to form a sealing portion, and the sealing portion is hermetically connected to the main body portion;
wherein the main body portion comprises a first surface and a second surface oppositely disposed in a first direction; as well as a first side surface, a second side surface, and a third side surface that connect the first surface and the second surface, the first side surface and the second side surface are oppositely disposed in a second direction, the second direction is perpendicular to the first direction, the third side surface connects the first side surface and the second side surface, the first surface is located in the second film region, the second surface is located in the fourth film region, and the sealing portion comprises a top sealing region disposed on the first side surface and a first side sealing region disposed on the third side surface;
a tab, electrically connected to the electrode assembly and extending out of the packaging bag through the top sealing region; and
an easy-peel adhesive tape, comprising a substrate layer and an adhesion layer disposed on a surface of the substrate layer; the easy-peel adhesive tape further comprising a first surface region, a second surface region, a first side surface region, a first lug, and a second lug; the first surface region, the first side surface region, and the second surface region being sequentially connected;
wherein the first surface region is adhered to one of the first surface and the second surface, the second surface region is adhered to the other of the first surface and the second surface, the first side surface region is adhered to the first side sealing region, the first lug is disposed at an edge of the first side surface region and adhered to the second side surface, the second lug is disposed at an edge of the first surface region or the second surface region and adhered to the second side surface; and in the second direction, the second lug and the first lug have a first overlapping portion.

2. The secondary battery according to claim 1, wherein, the first side sealing region comprises a first portion and a second portion connected to each other; in a third direction perpendicular to the first direction and the second direction, the first portion partially overlaps with the third side surface; in the second direction, the second portion partially overlaps with the second side surface; and the first overlapping portion is separated from the second portion.

3. The secondary battery according to claim 1, wherein, the secondary battery further comprises an adhesion member, the adhesion member adheres the electrode assembly to the packaging bag; and in the first direction, the adhesion member is located between the electrode assembly and the first surface.

4. The secondary battery according to claim 1, wherein, the second lug covers a junction of the first surface, the second side surface, and the third side surface.

5. The secondary battery according to claim 1, wherein, a material of the packaging bag is an aluminum-plastic film or a steel-plastic film.

6. The secondary battery according to claim 1, wherein, in the first direction, a total thickness of the electrode assembly and the packaging bag is H1, a width of the first lug is H2, a length of the second lug is H3, 0.5 mm < H2 ≤ H1, and 0.5 mm ≤ H3 ≤ H1.

7. The secondary battery according to claim 1, wherein,
the main body portion further comprises a fourth side surface disposed opposite to the third side surface in a third direction, the third direction being perpendicular to the first direction and the second direction; and
the sealing portion further comprises a second side sealing region disposed on the fourth side surface; the easy-peel adhesive tape further comprises a second side surface region, a third surface region, a third lug, and a fourth lug; wherein the second side surface region is connected to the second surface region and adhered to the second side sealing region, the third surface region is adhered to the first surface or the second surface, the first surface region and the third surface region are located on the same side of the packaging bag, the third lug is disposed at an edge of the second side surface region and adhered to the second side surface, the fourth lug is disposed at an edge of the third surface region or the second surface region; and when observed in the second direction, the fourth lug and the third lug have a second overlapping portion.

8. The secondary battery according to claim 7, wherein, in the third direction, the first lug is separated from the third lug.

9. The secondary battery according to claim 7, wherein, in the third direction, a length of the first lug and a length of the third lug are both greater than or equal to 0.5 mm and less than or equal to 1/3 of a width of the secondary battery.

10. The secondary battery according to claim 1, wherein, the substrate layer comprises one or more selected from the group consisting of polyethylene terephthalate, polypropylene, polyethylene, or polyimide, and the adhesion layer comprises at least one of rubber, silicone, and acrylic polymer.

11. An electronic apparatus, comprising a battery compartment and the secondary battery according to any one of claims 1 to 10, wherein a region of the easy-peel adhesive tape adhered to the second surface is adhered to the battery compartment.
